# EUROPÄISCHE PATENTSCHRIFT

(11) **EP 2 072 300 B1**
(45) Veröffentlichungstag und Bekanntmachung des Hinweises auf die Patenterteilung: **22.06.2011**
(21) Anmeldenummer: 08020215.3
(22) Anmeldetag: 20.11.2008
(51) Int. Cl.: B60H 1/34

(54) **Klimaanlagen- und Belüftungssystem für ein Fahrzeug**
Air conditioning and venting system for a vehicle
Système de climatisation et d'aération pour véhicule

(30) Priorität: 18.12.2007 DE 102007061575
(43) Veröffentlichungstag der Anmeldung: 24.06.2009
(73) Patentinhaber: Behr GmbH & Co. KG, 70469 Stuttgart (DE)
(72) Erfinder: Feith, Thomas, 70825 Korntal-Münchingen (DE); Salah, Benamira, 70180 Stuttgart (DE)

(56) Entgegenhaltungen:
- EP-A- 0 347 650
- EP-A- 1 785 299
- WO-A-2005/016673

## Beschreibung

Die Erfindung betrifft ein Klimaanlagen- und Belüftungssystem für ein Fahrzeug gemäß dem Oberbegriff des Anspruches 1, wie es z.B. aus EP 1 785 299 A1 bekannt ist.

Um Luft einem Fahrzeuginnenraum zuzuführen sind üblicherweise eine Mehrzahl von einzelnen Düsen vorgesehen. So sind im Frontbereich eines Fahrzeuginnenraums üblicherweise Seiten- und Mitteldüsen sowie Defrost- und Fußraumdüsen angeordnet. Häufig tritt die Luft auf Grund eines kleinen Mischraums der Klimaanlage nur unzureichend vermischt in die Luftkanäle zu den einzelnen Düsen. In Folge geringer Luftkanallängen erfolgt auch in den Luftkanälen nur eine unzureichende Vermischung der Luft, so dass die Luft strähnig mit kalten und warmen Teilluftströmen aus den Düsen austritt, was den Komfort der Insassen beeinträchtigt.

Als Düsen sind unter anderem sogenannte Komfortdüsen bekannt, bei denen ein Luftstrom im Inneren der Düse durch entsprechende Leitschaufeln, Leitflächen o.ä. mit einem Drall versetzt wird, so dass sich der Luftstrahl beim Ausströmen stark aufweitet und im wesentlichen diffus austritt. Hierbei kann die Düse auch derart ausgestaltet sein, dass eine Wahl zwischen diffusem Ausströmen und gerichtetem Ausströmen (Spotstrahl) möglich ist. Derartige Komfortdüsen sind beispielsweise in der WO 2005 / 016673 A1 (starre Leitflächen), der DE 10 2005 054 295.6 (starre Leitschaufeln) oder der DE 10 2006 053 836.6 (bewegliche Leitschaufeln) beschrieben. Die Leitflächen bzw. -schaufeln bilden hierbei Drallerzeuger, welche einen Luftstrahl verwirbeln. Derartige Komfortdüsen sind im Frontbereich eines Fahrzeugs als Mittel- oder Seitendüsen angeordnet.

Es ist Aufgabe der Erfindung, ein verbesserte Klimaanlagen- und Belüftungssystem für ein Fahrzeug zur Verfügung zu stellen.

Diese Aufgabe wird gelöst durch ein Klimaanlagen- und Belüftungssystem mit den Merkmalen des Anspruches 1. Vorteilhafte Ausgestaltungen sind Gegenstand der Unteransprüche.

Die Erfindung betrifft ein Klimaanlagen- und Belüftungssystem mit mindestens einem Drallerzeuger, welcher die durchströmende Luft mit einem Drall behaftet, wobei der Drallerzeuger durch mindestens zwei Drallerzeugungselemente gebildet ist, welche einen Rahmen und einen im Rahmen angeordneten Hohlzylinder sowie zwischen dem Rahmen und dem Hohlzylinder angeordnete Leitflächen aufweisen. Ein derartiges Klimaanlagen- und Belüftungssystem ist insbesondere für sehr kompakte Klimaanlagen geeignet, welche keinen oder einen nur unzureichenden Mischraum hinter Verdampfer und Heizer aufweisen, so dass in die Luftkanäle zu den Düsen im Wesentlichen unvermischt ein Warm- und ein Kaltluftstrom nebeneinander strömen. Die Vermischung von warmer und kalter Luft erfolgt hierbei zumindest teilweise im Bereich der Düsen, so dass die austretende Luft weniger strähnig in Bezug auf die Temperaturverteilung ist, und dadurch der Komfort der Insassen gesteigert werden kann. Ein derartiger Drallerzeuger kann im Prinzip an beliebiger Stelle im Luftkanal zwischen dem Eintritt der von der Klimaanlage kommenden Luft in denselben und dem Austritt der Luft in den Fahrzeuginnenraum, wo in der Regel eine Düse angeordnet ist, angeordnet sein. Erfindungsgemäß sind die Drallerzeuger jedoch direkt am Austritt angeordnet, wobei am Austritt keine Mittel zur Einstellung der Strömungsrichtung der Luft, wie beispielsweise verschwenkbare Lamellen, vorgesehen sind.

Der Rahmen des Drallerzeugungselements, welches Teil des Drallerzeugers ist, weist einen rechteckförmigen, insbesondere quadratischen Querschnitt auf. Dabei entspricht bevorzugt die Länge des Rahmens der Länge des in demselben angeordneten Hohlzylinders.

Die mindestens zwei Drallerzeugerelemente sind nebeneinander in einer Defrostdüse angeordnet.

Besonders bevorzugt sind die Rahmen mindestens zweier Drallezeugerelemente direkt nebeneinander mit einem Schenkel aneinander anliegend oder einstückig mit einem gemeinsamen Schenkel ausgebildet. Hierbei bilden besonders bevorzugt zwei Drallerzeugerelemente eine Zweiergruppe, wobei die durchströmende Luft von jedem der Drallerzeugerelemente mit einem in entgegengesetzter Richtung gerichteten Drall versehen wird. Alternativ wird in Abhängigkeit vom gewünschten Abströmverhalten, die durchströmende Luft von jedem der Drallerzeugerelemente mit einem in gleicher Richtung gerichteten Drall versehen.

Vorzugsweise sind zwischen einzelnen Drallerzeugerelementen, insbesondere bevorzugt zwischen Zweiergruppen von Drallerzeugerelementen, freie Zwischenräume angeordnet, welche von Luft durchströmbar sind, ohne dass die dieselben durchströmende Luft mit einem Drall beaufschlagt wird.

An der Außenfläche des Hohlzylinders sind vorzugsweise mindestens zwei, insbesondere mindestens vier, schräggestellte Leitflächen zur Drallerzeugung angeordnet. Die Zahl der Leitflächen beträgt bevorzugt zwei bis zwölf, insbesondere bevorzugt vier bis acht.

Ein weiterer Drallerzeuger ist bevorzugt in eine Fußraumdüse integriert.

Der weitere Drallerzeuger kann einen hohlzylindrischen Rahmen und auf der Außenfläche des Rahmens angeordnete zusätzliche Leitflächen aufweise, so dass auch der Luftstrom, welche zwischen Gehäusewand oder Luftkanalwand und der Außenfläche des Rahmens durchströmt, mit einem Drall versehen wird. Hierbei ist bevorzugt die Richtung des Dralls gleichgerichtet zur Richtung des durch die zwischen Rahmen und Hohlzylinder angeordneten Leitflächen erzeugten Dralls.

Bei dem in die Defrostdüse integrierten Drallerzeuger wird derselbe durch eine Mehrzahl von Drallerzeugerelementen gebildet, während bei dem weiteren in die Fußraumdüse integrierten Drallerzeuger derselbe bevorzugt durch ein einziges Drallerzeugerelement gebildet wird.

Beim Drallerzeuger handelt es sich besonders bevorzugt um ein Kunststoff-Spritzgussteil, welches einfach und kostengünstig herstellbar ist.

Im Folgenden wird die Erfindung anhand von einen Ausführungsbeispiel mit Varianten, teilweise unter Bezugnahme auf die Zeichnung, im Einzelnen erläutert. Es zeigen:

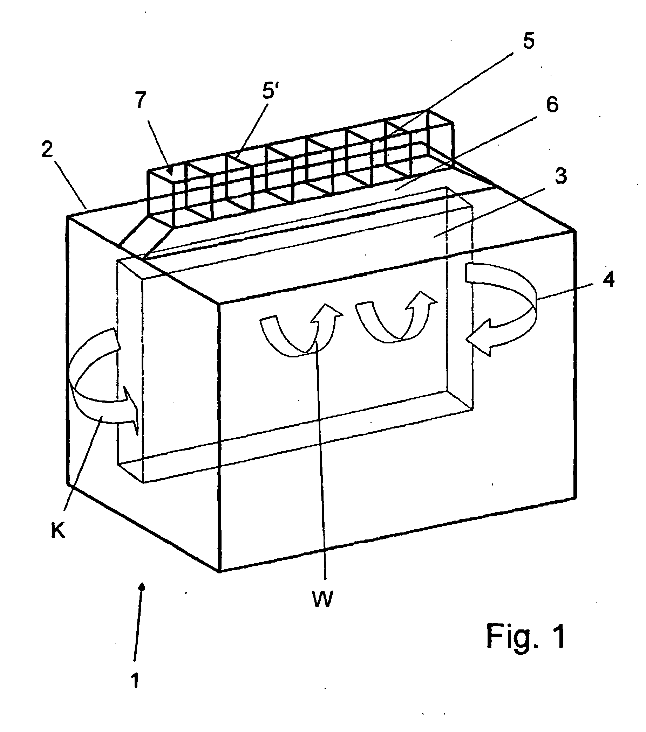

- Fig. 1: eine perspektivische, stark schematisierte Darstellung ei- nes Teils einer Klimaanlage samt Defrostdüse,

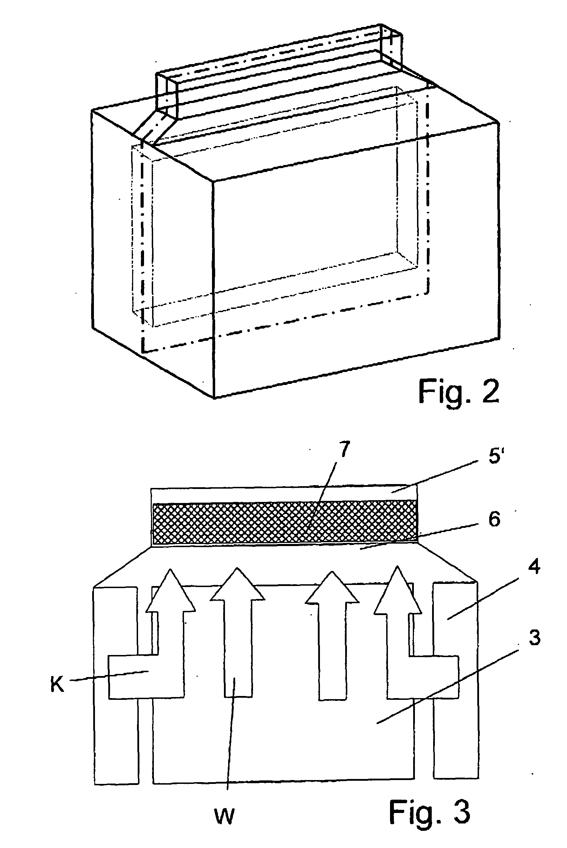

- Fig. 2: eine Fig. 1 entsprechende Darstellung mit Darstellung ei- ner Ebene III,
- Fig. 3: eine Schnittdarstellung der Klimaanlage entlang der Ebe- ne III,

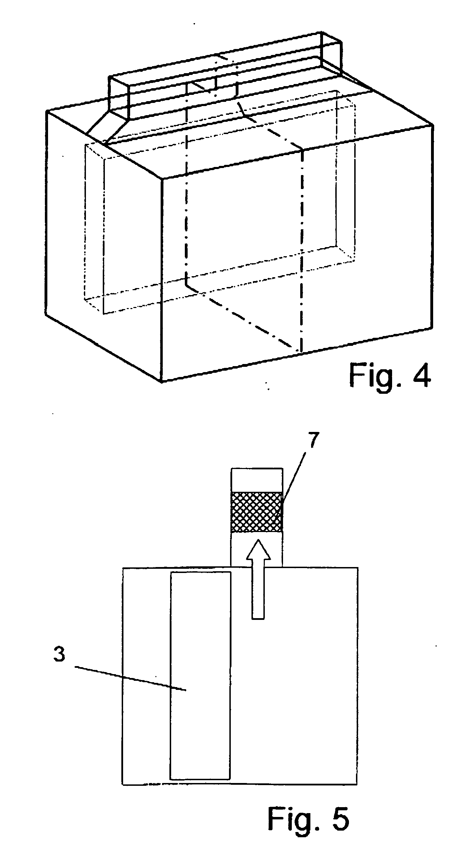

- Fig. 4: eine Fig. 1 entsprechende Darstellung mit Darstellung ei- ner Ebene V,
- Fig. 5: eine Schnittdarstellung der Klimaanlage entlang der Ebe- ne V,

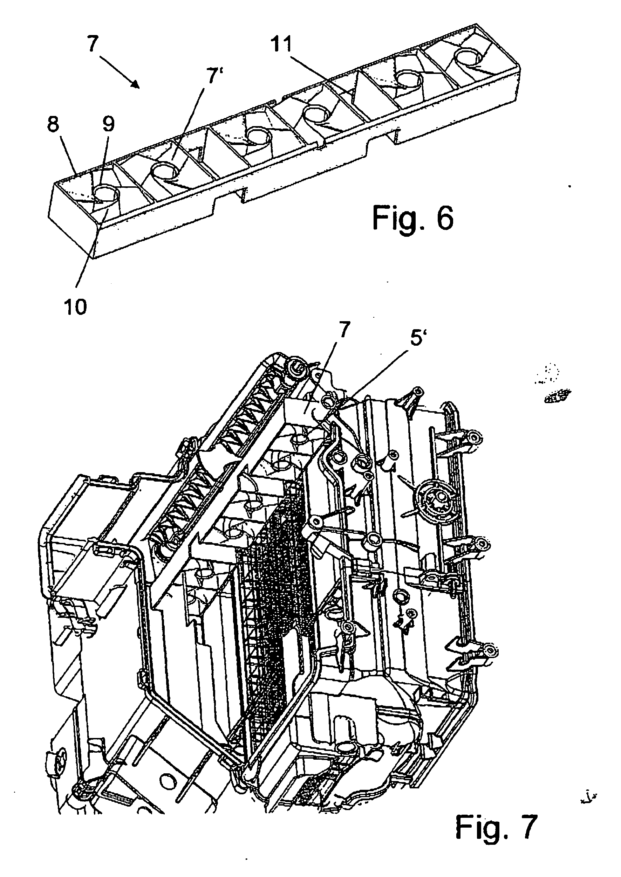

- Fig. 6: eine perspektivische Ansicht eines Drallerzeugers gemäß dem Ausführungsbeispiel,
- Fig. 7: eine perspektivische Ansicht des Drallerzeugers im einge- bauten Zustand,

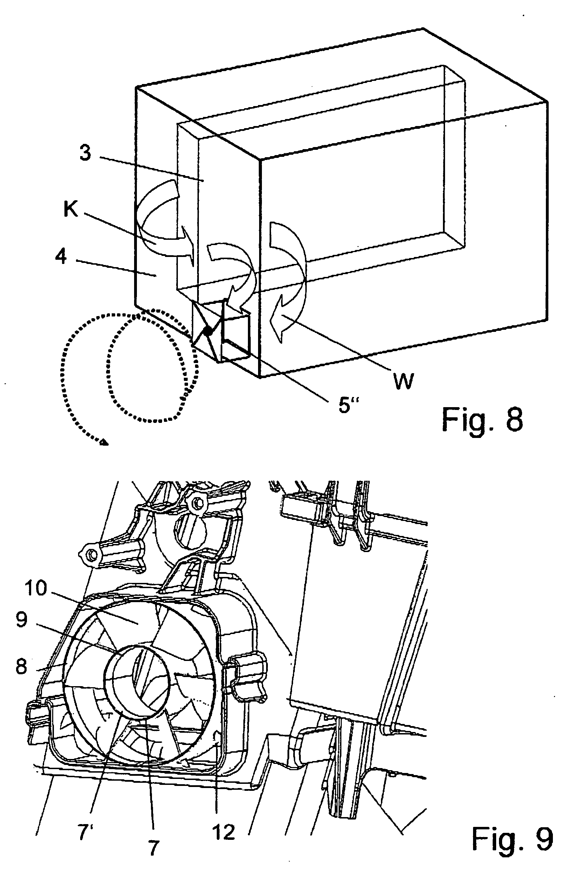

- Fig. 8: eine perspektivische, stark schematisierte Darstellung ei- nes Teils der Klimaanlage samt einer Fußraumdüse,
- Fig. 9: eine perspektivische Ansicht des weiteren Drallerzeugers von Fig. 8,

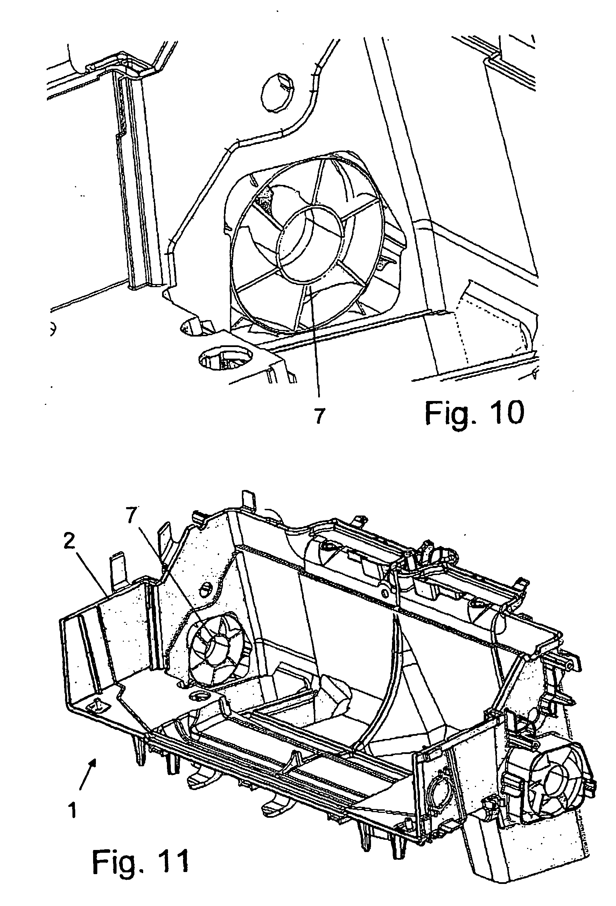

- Fig. 10: eine andere perspektivische Ansicht des weiteren Drallerzeugers von Fig. 9, und
- Fig. 11: eine perspektivische Ansicht eines Ausschnitts des Kli- maanlagengehäuses mit zwei dieser weiteren Drallerzeuger.

Ein Kraftfahrzeug, vorliegend ein links gelenktes Fahrzeug, weist ein Klimaanlagen- und Belüftungssystem mit einer Klimaanlage 1 auf, die in der Zeichnung nur ausschnittsweise angedeutet ist. Die Klimaanlage 1 weist ein Gehäuse 2, ein Gebläse, einen Verdampfer und einen Heizer 3 vorliegend zwei, den Heizer 3 seitlich umgehenden Kaltluftbypässen 4 auf. Die Klimaanlage 1 dient zur Temperierung der dem Fahrzeuginnenraum zuzuführende Luft. Die temperierte Luft gelangt über eine Mehrzahl unterschiedlicher Luftkanäle zu Düsen 5, über welche sie in den Fahrzeuginnenraum gelangt.

Im Frontbereich des Fahrzeuginnenraums sind zur Belüftung und Temperierung über die Instrumententafel verteilt vier Düsen angeordnet, nämlich eine fahrerseitige Seitendüse, eine fahrerseitige Mitteldüse, eine beifahrerseitige Mitteldüse und eine beifahrerseitige Seitendüse. Die Düsen sind vorliegend sogenannte Komfortdüsen, welche in Abhängigkeit der Einstellung einen gerichteten Luftstrahl (Spotstrahl) oder ein diffuses Ausströmen der Luft ermöglichen. Hierbei ist im Austrittsbereich, d.h. in direkter Nachbarschaft des Fahrzeuginnenraums, eine Aufteilung des Luftkanals in einen Teilluftkanal für ein gerichtetes Ausströmen und einen Teilluftkanal für ein diffuses Ausströmen vorgesehen, wobei im Teilluftkanal für ein diffuses Ausströmen Drallerzeuger in Gestalt von schräggestellten Leitflächen angeordnet sind. Alternativ kann auch ein klappenartiges Element, welches Drallerzeuger beinhaltet, in den Luftkanal geschwenkt oder geschoben werden- Die Luftkanäle sowie diese Düsen sind in der Zeichnung nicht dargestellt.

Teil des Klimaanlagen- und Belüftungssystems sind neben den bekannten Komfortdüsen ferner eine der Entfrostung der Windschutzscheibe dienende Defrostdüse 5' und im Fußraum angeordnete Fußraumdüsen 5" sowie die zwischen dem Gehäuse 2 der Klimaanlage 1 und den Düsen 5 angeordnete Luftkanäle 6, die jedoch auf Grund des vorhandenen, begrenzten Bauraums vorliegend in beiden Fällen extrem kurz ausgebildet sind.

Im Folgenden wird als Ausführungsbeispiel der Erfindung die Defrostdüse 5' näher erläutert. Im Defrostbetrieb gelangt Kaltluft K, die über den Kaltluftbypass 4 direkt vom Verdampfer kommt, und Warmluft W, die durch den Heizer 3 strömt, über einen vorliegend sehr kurz ausgebildeten Luftkanal zur Defrostdüse 5'. In Folge der kurzen Weglängen strömt die Luft im Wesentlichen unvermischt als Warmluft W und Kaltluft K, wie in der Zeichnung durch Pfeile angedeutet, zur Defrostdüse 5'. In der Defrostdüse 5' ist über die gesamte Breite ein einstückig ausgebildeter Drallerzeuger 7 angeordnet, welcher vorliegend durch eine Mehrzahl nebeneinander in Zweiergruppen angeordneter Drallerzeugungselemente 7' gebildet ist.

Jedes der Drallerzeugungselemente einer Zweiergruppe weist einen vorliegend mit quadratischem Querschnitt ausgebildeten Rahmen 8, mittig im Rahmen angeordnet einen Hohlzylinder 9 mit einer Länge, welche vorliegend im Wesentlichen der Tiefe des Rahmens 8 entspricht, und vier zwischen dem Rahmen 8 und dem Hohlzylinder 9 angeordnete schräggestellte Leitflächen 10 auf. Die Rahmen 8 weisen hierbei einen gemeinsamen Schenkel auf.

Die Leitflächen 10 eines jeden Drallerzeugungselements 7' sind windradartig um den entsprechenden Hohlzylinder 9 angeordnet, so dass die zwischen dem Rahmen 8 und der Außenfläche des Hohlzylinders 9 durchströmende Luft mit einem Drall versehen wird, während die den Hohlzylinder 9 durchströmende Luft vorliegend drallfrei bleibt. Vorliegend sind die Leitflächen 10 ausgebildet und lediglich schräg gestellt, um einen Drall zu erzeugen, alternativ ist jedoch auch eine leitschaufelartig gekrümmte Ausgestaltung und ggf. das Vorsehen eines leitschaufelartigen Profils der Leitflächen möglich.

Die Leitflächen 10 der beiden Drallerzeugungselemente 7' einer Zweiergruppe sind in entgegengesetzter Richtung gerichtet, d.h. beim ersten Drallerzeugungselement 7' wird ein Drall entgegen dem Uhrzeigersinn und beim zweiten Drallerzeugungselement 7' ein Drall im Uhrzeigersinn erzeugt. Die einzelnen Zweiergruppen von Drallerzeugungselementen 7' sind vorliegend durch drallerzeugerfreie Zwischenräume 11 mit einer Breite, welche etwa der Hälfte der Breite eines Drallerzeugungselements 7' entspricht, getrennt, so dass auch durch diese Zwischenräume 11 die durchströmende Luft drallfrei bleibt.

Der Drallerzeuger 7 ist vorliegend einstückig als Kunststoff-Spritzgussteil ausgebildet. Alternativ ist auch eine mehrteilige Ausgestaltung möglich, so können bspw. Zweiergruppen von Drallerzeugungselementen einstückig ausgebildet und in einen Rahmen oder direkt in das entsprechende Düsengehäuse eingesetzt werden. Ebenfalls können auch einzelne Drallerzeugungselemente entsprechend gruppiert in einen Rahmen oder das Düsengehäuse eingesetzt werden.

Im Folgenden wird eine der Fußraumdüsen 5" näher erläutert. Hierbei ist die mittlere Fußraumdüse 5" in direkter Nachbarschaft der Klimaanlage angeordnet, d.h. die Luftkanallänge ist auch in diesem Fall extrem kurz. Daher strömt wiederum die Luft im Wesentlichen unvermischt als Warmluft W und Kaltluft K, wie in der Zeichnung durch Pfeile angedeutet, zur entsprechenden Fußraumdüse 5". Die Fußraumdüse 5" weist einen Drallerzeuger 7, welcher durch ein einzelnes Drallerzeugerelement 7' gebildet ist, auf. Das Drallerzeugerelement 7' weist einen Rahmen 8 und einen mittig im Rahmen 8 angeordneten Hohlzylinder 9 auf, wobei vorliegend der Rahmen 8 ebenfalls als Hohlzylinder ausgebildet ist, und die beiden Hohlzylinder konzentrisch zueinander angeordnet und von gleicher Länge ausgebildet sind. Zwischen dem Rahmen 8 und dem Hohlzylinder 9 sind wiederum Leitflächen 10 angeordnet, wobei vorliegend sechs schaufelartig gekrümmte Leitflächen 10 in äquidistanten Abständen voneinander um den Umfang des Hohlzylinders 9 verteilt vorgesehen sind. Die Leitflächen sind derart gekrümmt, dass sie anströmseitig, also auf Seite der Klimaanlage, nahezu parallel zur Mittellängsachse verlaufen, und abströmseitig etwa in einem 45°-Winkel zur Mittellängsachse verlaufen.

Neben den Leitflächen 10 zwischen Rahmen 8 und Hohlzylinder 9 sind im Zwischenraum zwischen der Luftkanalwand und dem Rahmen 8 weitere äußere Leitflächen 12 ausgebildet, welche ebenfalls gekrümmt ausgebildet sind. Die Anzahl der äußeren Leitflächen 12 ist größer als die Anzahl der inneren Leitflächen 10. Ferner ist die Geometrie der Leitflächen 12 an die Geometrie der Luftkanalwand angepasst, so dass einzelne Leitflächen 12 in radialer Richtung eine sehr kurze Länge und andere Leitflächen 12 eine etwas größere Länge haben, wobei jedoch die Länge der äußeren Leitflächen 12 kleiner als die Länge der inneren Leitflächen 10 ist. Die Krümmung der äußeren Leitflächen 12 entspricht etwa der Krümmung der inneren Leitflächen 10.

Auch in diesem Fall gelangt durch den inneren Hohlzylinder 9 die Luft drallfrei von der Klimaanlage in den Fahrzeuginnenraum, während die durch den Raum zwischen dem Rahmen 8 und dem inneren Hohlzylinder 9 strömende Luft wie auch die zwischen der Luftkanalwand und dem Rahmen 8 strömende Luft mit einem Drall beaufschlagt wird, bevor sie in den Fahrzeuginnenraum gelangt.

Durch die Drallbehaftung ergibt sich nach dem Austritt in den Fußraum eine Aufweitung des Luftstrahls in Verbindung mit einer guten Durchmischung unterschiedlich temperierter Bereiche des Luftstroms, so dass der Komfort der Insassen erhöht wird.

Gemäß einer nicht in der Zeichnung dargestellten Variante ist der Luftkanal mit einem hohlzylindrischen Querschnitt ausgebildet, wobei der Innendurchmesser dem Außendurchmesser des hohlzylindrischen Rahmens entspricht, so dass zwischen Luftkanalwand und Rahmen kein Zwischenraum vorgesehen ist Auch in diesem Fall sorgt der drallbehaftete Luftstrom für eine Aufweitung und für eine verbesserte Vermischung unterschiedlich temperierter Bereiche des Luftstroms.

## Patentansprüche

1. Klimaanlagen- und Belüftungssystem mit mindestens einem Drallerzeuger, welcher die durchströmende Luft mit einem Drall beaufschlagt und durch mindestens zwei nebeneinander angeordnete Drallerzeugungselemente (7') gebildet ist, welche jeweils einen Rahmen (8) und einen im Rahmen (8) angeordneten Hohlzylinder (9) sowie zwischen dem Rahmen (8) und dem Hohlzylinder (9) angeordnete Leitflächen (10) aufweisen, **dadurch gekennzeichnet, dass** der Rahmen (8) einen rechteckförmigen, insbesondere quadratischen Querschnitt aufweist, und der Drallerzeuger (7) in einer Defrostdüse (5') angeordnet ist.

2. Klimaanlagen- und Belüftungssystem nach einem der vorhergehenden Ansprüche, **dadurch gekennzeichnet, dass** die Rahmen mindestens zweier Drallerzeugerelemente (7') direkt nebeneinander mit einem Schenkel aneinander anliegend oder einstückig mit einem gemeinsamen Schenkel ausgebildet sind.

3. Klimaanlagen- und Belüftungssystem nach einem der vorhergehenden Ansprüche, **dadurch gekennzeichnet, dass** zwischen einzelnen Drallerzeugerelementen (7') freie Zwischenräume (11) angeordnet sind, wel ehe von Luft durchströmbar sind, ohne dass die dieselben durchströmende Luft mit einem Drall beaufschlagt wird.

4. Klimaanlagen- und Belüftungssystem nach einem der vorhergehenden Ansprüche, **dadurch gekennzeichnet, dass** an der Außenfläche des Hohlzylinders (9) mindestens zwei, insbesondere mindestens vier, schräggestellte Leitflächen (10) zur Drallerzeugung angeordnet sind.

5. Klimaanlagen- und Belüftungssystem nach einem der vorhergehenden Ansprüche, **dadurch gekennzeichnet, dass** der Drallerzeuger (7) Zweiergruppen von Drallerzeugerelementen (7') aufweist, wobei die Leitflächen (10) der Drallerzeugerelemente (7') einer Zweiergruppe bei einem Drallerzeugerelement (7') in Uhrzeigersinn schräggestellt und die Leitflächen (10) des zweiten Drallerzeugerelements (7') der Zweiergruppe entgegengesetzt zum Uhrzeigersinn schräggestellt sind.

6. Klimaanlagen- und Belüftungssystem nach Anspruch 5, **dadurch gekennzeichnet, dass** zwischen zwei Zweiergruppen von Drallerzeugerelementen (7') ein Zwischenraum (11) ohne Drallerzeugung vorgesehen ist.

7. Klimaanlagen- und Belüftungssystem nach einem der vorhergehenden Ansprüche, **dadurch gekennzeichnet, dass** ein weiterer Drallerzeuger (7) in einer Fußraumdüse (5") angeordnet ist.

8. Klimaanlagen- und Belüftungssystem nach Anspruch 7, **dadurch gekennzeichnet, dass** der weitere Drallerzeuger (7) einen hohlzylindrischen Rahmen (8) und auf der Außenfläche des Rahmens (8) angeordnete zusätzliche Leitflächen (12) aufweist.

9. Klimaanlagen- und Belüftungssystem nach Anspruch 7 oder 8, **dadurch gekennzeichnet, dass** der weitere Drallerzeuger (7) durch ein Drallerzeugerelement (7') gebildet ist.

10. Klimaanlagen- und Belüftungssystem nach einem der vorhergehenden Ansprüche, **dadurch gekennzeichnet, dass** der Drallerzeuger (7) ein Kunststoff-Spritzgussteil ist.

## Claims

1. An air conditioning and ventilation system, comprising art least one swirl generator, which applies a swirl to the air flowing through and is formed by at least two swirl generating elements (7') disposed next to one another, each comprising a frame (8) and a hollow cylinder (9) disposed in the frame (8) and guide surfaces (10) disposed between the frame (8) and the hollow cylinder (9), **characterized in that** the frame (8) has a rectangular, more particularly a square, cross-section and the swirl generator (7) is disposed in a defrost nozzle (5').

2. The air conduit and ventilation system according to the preceding claim, **characterized in that** the frames of at least two swirl generating elements (7') directly adjacent to one another are configured to abut one another with one leg or configured to be integral with a common leg.

3. An air conditioning and ventilation system according to any one of the preceding claims, **characterized in that** free intermediate spaces (11) are disposed between individual swirl generating elements (7'), with air being able to flow through these spaces, without this air flowing through the same being subjected to a swirl.

4. An air conditioning and ventilation system according to any one of the preceding **characterized in that** at least two, and more particular at least four, inclined guide surfaces (10) for generating the swirl are disposed on the outer surface of the hollow cylinder (9).

5. An air conditioning and ventilation system according to any one of the preceding claims, **characterized in that** the swirl generator (7) comprises groups of two swirl generating elements (7'), wherein the guide surfaces (10) of the swirl generating elements (7') of a group of two are inclined clockwise on a swirl generating element (7) and the guide surfaces (10) of the second swirl generating element (7') of the group of two are inclined counterclockwise.

6. The air conditioning and ventilation system according to claim 5, **characterized in that** an intermediate space (11) without swirl generation is provided between two groups of two swirl generating elements (7').

7. An air conditioning and ventilation system according to any one of the preceding claims, **characterized in that** a further swirl generator (7) is disposed in a footwell nozzle (5").

8. The air conditioning and ventilation system according to claim 7, **characterized in that** the further swirl generator (7) comprises a hollow-cylindrical frame (8), and additional guide surfaces (12) disposed on the outer surface of the frame (8).

9. The air conditioning and ventilation system according to claim 7 or 8, **characterized in that** the further swirl generator (7) is formed by a swirl generating element (7').

10. An air conditioning and ventilation system according to any one of the receding claims **characterized in that** the swirl generator (7) is a synthetic material injection-molded part.

## Revendications

1. Système de climatisation et de ventilation comprenant au moins un générateur de tourbillons qui sollicite l'air en circulation, avec un tourbillon, et est formé par au moins deux éléments (7') de production de tourbillons disposés l'un à côté de l'autre, éléments de production de tourbillons qui présentent, à chaque fois, un cadre (8) et un cylindre creux (9) disposé dans le cadre (8), ainsi que des surfaces déflectrices (10) disposées entre le cadre (8) et le cylindre creux (9), **caractérisé en ce que** le cadre (8) présenté une section rectangulaire, en particulier carrée, et le générateur de tourbillons (7) est disposé dans une buse de dégivrage (5').

2. Système de climatisation et de ventilation selon la revendication 1, **caractérisé en ce que** les cadres d'au moins deux éléments de production de tourbillons (7') sont configurés directement les uns à côté des autres, en venant en appui l'un sur l'autre par une branche ou bien formant une seule et même pièce avec une branche commune.

3. Système de climatisation et de ventilation selon l'une ou l'autre des revendications précédentes, **caractérisé en ce que** des espaces intermédiaires libres (11) sont disposés entre différents éléments de production de tourbillons (7'), espaces intermédiaires qui peuvent être traversés par de l'air, sans que l'air traversant ces mêmes espaces intermédiaires soit sollicité par un tourbillon.

4. Système de climatisation est de ventilation selon l'une quelconque des revendications précédentes, **caractérisé en ce qu'**au moins deux, en particulier au moins quatre surfaces déflectrices (10) positionnées de façon inclinée est servant à la production de tourbillons sont disposées sur la surface extérieure du cylindre creux (9).

5. Système de climatisation et de ventilation selon l'une quelconque des revendications précédentes, **caractérisé en ce que** le générateur de tourbillons (7) présente des groupes jumelés d'éléments de production de tourbillons (7'), où les surfaces déflectrices (10) des éléments de production de tourbillons (7') d'un groupe jumelé sont, concernant un élément de production de tourbillons (7'), positionnées de façon inclinée dans le sens des aiguilles d'une montre, et les surfaces déflectrices (10) du deuxième élément de production de tourbillons (7') du groupe jumelé sont positionnées de façon inclinée dans le sens inverse des aiguilles d'une montre.

6. Système de climatisation et de ventilation selon la revendication 5, **caractérisé en ce qu'**un espace intermédiaire (11) sans production de tourbillons est prévu entre deux groupes jumelés d'éléments de production de tourbillons (7').

7. Système de climatisation et de ventilation salon l'une quelconque des revendications précédentes, **caractérisé en ce qu'**un autre générateur de tourbillons (1') est disposé dans une buse (5") de l'espace pour les pieds.

8. Système de climatisation est de ventilation selon la revendication 7, **caractérisé en ce que** l'autre générateur de tourbillons (7) présente un cadre cylindrique creux (8) et des surfaces déflectrices supplémentaires (12) disposées sur la surface extérieure du cadre (8).

9. Système de climatisation et de ventilation selon la revendication 7 ou 8, **caractérisé en ce que** l'autre générateur de tourbillons (7) est formé par un élément de production de tourbillons (7').

10. Système de climatisation et de ventilation selon l'une quelconque des revendications précédentes, **caractérisé en ce que** le générateur de tourbillons (7) est une pièce en matière plastique moulée par injection.
